# EUROPEAN PATENT APPLICATION

(11) **EP 1 354 530 A1**
(43) Date of publication of application: **22.10.2003**
(21) Application number: 02425248.8
(22) Date of filing: 19.04.2002
(51) Int. Cl.: A43D 1/04, G05B 19/4097, B29D 31/50, B29C 33/38

(54) **Method for developing and integrated manufacturing shoe components and shoe so obtained**

(71) Applicant: Step-in S.r.l., 25028 Verolanuova (IT)
(72) Inventor: Cremaschi, Armido, 25028 Verolanuova (Brescia) (IT); Migliorati, Eugenio Franco, 25028 Verolanuova (Brescia) (IT)
(74) Representative: Botti, Mario

(57) **Abstract**

The invention relates to a method for developing and integrated manufacturing shoe components and to a shoe so obtained. The method comprises digitising sample points on the outer surface of a model last (2) and computing the spatial coordinates of said base shoe last (2) using computer means in a CAD setting. Then, the model last digital file representing the 3D surface contour of the base shoe last will be graded to produce a range of shoe lasts (5) distributed in a series of shoe sizes. Thereafter, an NC tool machine is fed with the spatial co-ordinates of the series of shoe shapes to be made, and those of the corresponding footwear components such as the insole (8), heel (12), top piece (11), etc. in order to manufacture such shoe shapes (5) and components by means of either a lathe or molding equipment.

## Description

### Field of Application

The present invention relates to a method for developing and integrated manufacturing shoe components.

The invention also relates to a shoe obtained by the above method.

The invention relates, but is not limited to a method for developing and integrated manufacturing shoe components, wherein a range of shoe shapes distributed on a series of shoe sizes are first provided from a base shoe shape.

### Prior Art

As it is well known in this technical field, most shoes are currently manufactured by using traditional methods of assembly on automatic or semi-automatic machines, whereby shoe uppers are fashioned onto a solid body known as the shoe shape, whose shape approximates that of the human foot.

This machinery are equipped with includes an operator station where the shoe shape is held centrally and the uppers, comprising a toe piece and a quarter, is mounted on the shoe shape with the insole upwards and the toe end facing the operator. Thus, the shoe shape is a blank piece, whereby a number of shoes of the same type can be manufactured by gluing the bottom parts, such as the heel, the sole, and a block of a plastics material.

The shoe shape is then taken out of the finished shoe and re-use in a new manufacturing cycle.

Making the shoe shape in all the sizes required and for the right and left fit is an operation that requires skill and involves extensive manual finishing work.

In the state of the art, each shoe shape is realized by mechanically removing material from a preformed blank of plastics that is obviously provided in a somewhat larger overall size than the finished shoe shape. This machining may be carried out, for example, on lathe equipment known as "Donzelli lathes", which are equipped with a special measuring head or gauge for reading a shoe size to be produced, and with a number of machining heads, usually four machining heads.

These lathes incorporate a mechanical scaling system, and can produce a full range of right/left shoe sizes from a single base shoe shape which has been realized by a skilled shoe designer or a stylist, for example.

A compound arrangement of gears and levers allows the dimensions of the base shoe shape to be scaled along three Cartesian axes. More particularly, mechanical adjustment arrangements are employed to make a copy of a basic shoe size, and any other smaller or larger size, using a separate mechanism with a tool holding arm that can be moved along the X and Y axes, the Z axis direction being simulated by the coordinated spinning of the base shoe shape and the corresponding shoe shape blanks.

Basically all such lathes include levers that enable this scaling to be effected on the basis of predetermined mechanisms and cinematic relations, long known in the industry.

It should be noted, however, that this machining procedure does not take into proper account the anatomy and morphology of an evolving human foot, which changes somewhat with both the type and the foot size of an individual.

Consequently, the shoe design or shoe shape maker is obliged to apply corrections during the machining process, in order to produce a series of shoe shapes that would adhere to the evolution of the foot in an anatomically accurate shape. Such corrective actions are left to the operator's judgement, and are bound to the machine limitations. Thus, it is not possible to guarantee the production of accurate copies of a series of shoe shapes that span a range of shoe sizes, maintaining the original style.

In addition, there exists at present a bewildering variety of shoe size systems, and of subjective shoe shape measuring methods, which often leads to a total lack of communication when the info must circulate among a certain number of subjects.

This introduces significant differences between the resulting shoe shape and its original design, mainly because of the lack of rules and checking tools for developing the shoe shape from a basic shoe size.

Such shortcomings cause a cascade of further limitations and waste. In fact, a commercially and cost-inefficient practice has been to design each component of a shoe by going through a series of increasingly finer adjustments that reiterate those made on the shoe shape, which is wasteful of time and resources.

The current technical process for manufacturing a shoe has a constraint in that the process steps cannot be carried out in parallel, and must go through a succession of serial sub-steps directed to attenuate the risk of intentional or unintentional deviations being applied, ahead of the process and marring the end product.

The underlying technical problem of this invention is to provide a new method for designing and manufacturing shoe components, in an integrated manner, with appropriate features to enable shoe shapes to be manufactured, exactly matching the foot morphology and anatomy, and associated components like the insole, toe piece, quarter, heel, etc., that are true to their shoe shapes; and this while maintaining their likeness to a base shoe shape through the various sizes to be provided.

This method should allow great simplified shoe developing and manufacturing procedures, and drastically reduced manual work to the shoe assembly procedure and lower overhead cost, while providing constant quality throughout.

### Summary of the Invention

The solvent idea at the basis of the present invention is that of using CAD software systems and tools to transfer the spatial co-ordinates of a predetermined base shoe shape, given as a sample, in a range of shoe sizes, by using parameters that fully emulate, or at least very closely track, the morphological evolution of the human foot.

Once a shoe shape is formed for each shoe size, and starting from the same CAD digital data of the shoe shapes, a series of shoe components can be manufactured which closely imitate the shoe shape to enter a shoe construction, such as insole, toe piece, quarter, heel.

In essence, by using a CAM system on a NC tool machinery, or by molding such shoe components, shoe shapes and related shoe components can be manufactured in large scales based on the same data, as are used for manufacturing shoe shapes. Thus, components can be made that are true to their associated shoe shapes, and assembly techniques, hitherto impracticable, can now be used.

Based on this idea, the technical problem is solved by a method for developing and integrated manufacturing shoe components as defined in the attached Claims 1 and foll..

The technical problem is further solved by a shoe as defined in Claim 7 and foll..

The features and advantages of the method and shoe according to this invention will become apparent from the following description, of an embodiment thereof, given by way of example and not of limitation, with reference to the accompanying drawings.

### Brief Description of the Drawings

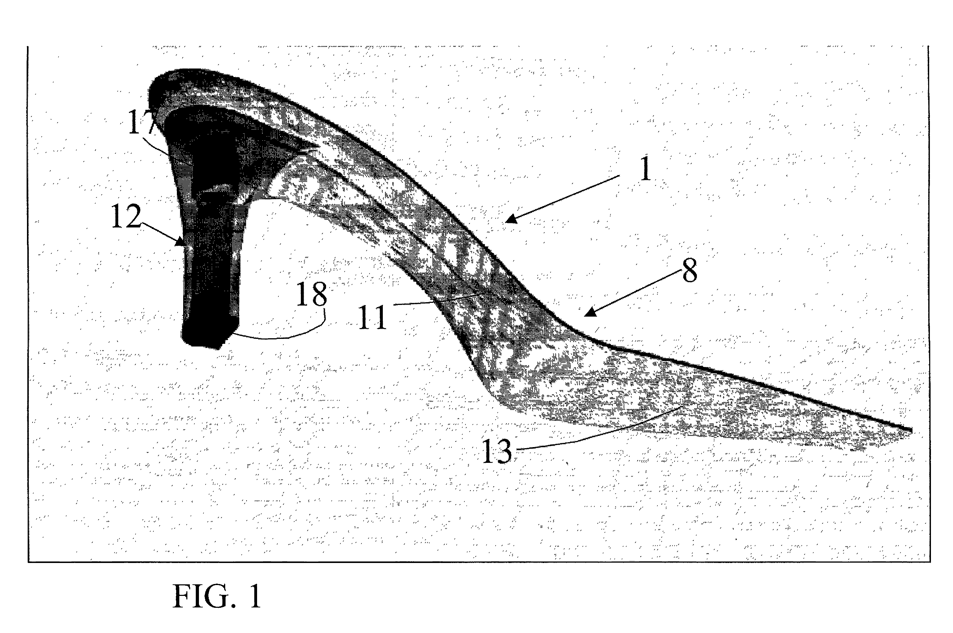

- Figure 1 shows a perspective and schematic view of shoe components obtained and assembled by the method of this invention.
- Figure 2 shows a perspective and schematic side view of a virtual shoe shape associated with the shoe components shown in Figure 1.
- Figure 3 shows a perspective view of a virtual shoe shape obtained on a computer means using CAD software, according to the invention.

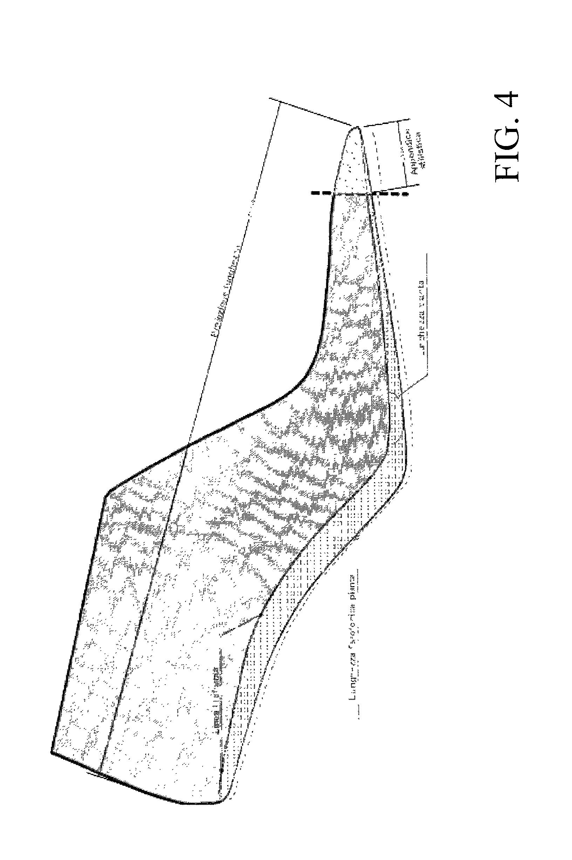

- Figure 4 shows a schematic side view of a shoe shape 1 that brings out the contour lines and projected length of the shoe shape.
- Figure 5 shows another perspective view of a virtual shoe shape obtained on a computer means using CAD software, which brings out certain guidelines for three-dimensionally re-constructing a shoe shape and shoe components associated therewith.
- Figure 6 shows a perspective view of a shoe shape that corresponds to the shoe shape shown in Figure 4, obtained from two different shoe shapes, by using the structural portion of the first of these shoe shapes and the style portion of the second so that the same components can be used, but with stylistic lines.

### Detailed Description

With reference to the drawings, a shoe blank, obtained by assembling together shoe components made by the designing and manufacturing method of this invention, is schematically and generally shown at 1.

A shoe that incorporates the blank 1 is made on a support consisting of a shoe shape 5 that, unlike known shoe shapes made by traditional methods, is true to the morphology and anatomy of the human foot, and at the same time it matches the shape of a base shoe shape 2 of basic shoe size and spans a range of sizes based on the base shoe shape 2.

As more clearly explained hereinafter, a base shoe shape of basic shoe size is a shoe shape intended to reproduce an average foot as closely as possible, so that the shoe shape matches the widest possible variety of human feet.

The method of the invention comprises a sequence of steps, wherein a series of shoe shapes in a range of shoe sizes are developed from the base shoe shape 2 of basic size.

In conformity with the shoe sizing system presently in use, a French size 21 or 22 is usually taken as a basic size for developing child-size shoe shapes; size 37 or 38 for lady-size shoe shapes; and size 41 or 42 for gentleman-size shoe shapes. The need to use a number of base shoe shapes has come, in fact, by the current development system showing departures that are deeper the farther a shoe shape evolves from the base shoe shape.

The method of this invention comprises a first step of gathering data concerning the base shoe shape 2 of basic shoe size. The base shoe shape may be supplied, as is usual, by a shoe designer maker or a stylist using conventional techniques, or be an otherwise classical shape in the industry.

In all cases, the method of this invention comprises a step of gathering data in digital form about the base shoe shape 2 of basic size.

For instance, the surface of the base shoe shape 2 of basic size is accurately 3-D gauged to obtain spatial coordinates x_{B}, y_{B} and z_{B} of each point P_{B} on that surface, using gauges and CAD means of data gathering.

In essence, a gauge is run across the true surface of the base shoe shape 2 along paths that allow the shape of the shoe shape to be accurately re-constructed. The gauge is essentially a mechanical type of gauge controlled by a computer means 10 on which CAD simulation programs are run. Alternatively, laser optic scanning systems can be used, although these systems could introduce local distortion due to reflective and/or interference effects, which would make re-constructing the surface unavoidable.

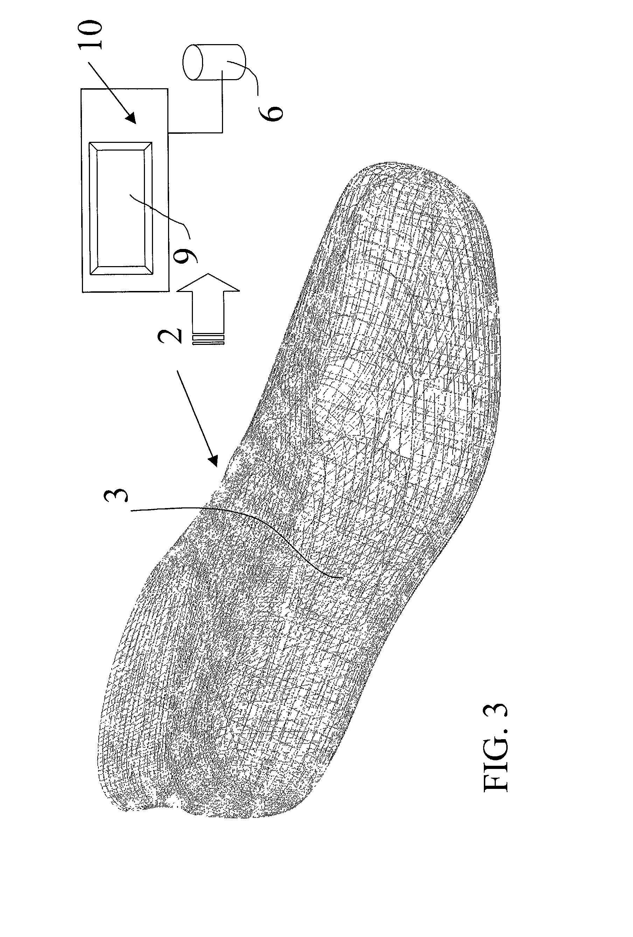

The base shoe shape 2 of basic size is therefore digitized, or rather, reconstructed in a digital format using a 3D CAD data gathering technique, as shown in Figure 3.

In all cases, the outcome of this data gathering step is a data file that can be analyzed in a 3D CAD setting. The surface 3 of the base shoe shape 2, as re-constructed in digital form, can be retouched by means of the CAD program.

Of course, there is no reason why a base shoe shape already available in a digital format for CAD processing could not be used instead. For example, the data about such a shoe shape could be retrieved from a storage unit 6 connected to or associated with said computer means. Alternatively, the data could be retrieved from external or bulk memories, e.g. from a database.

In any case, once the base shoe shape 2 is made available in digital form, a screen 9 of the computer means 10 will display a virtual or simulated surface 3 extending along three dimensions, and allowing each point to be identified by Cartesian spatial co-ordinates, as shown in Figure 3.

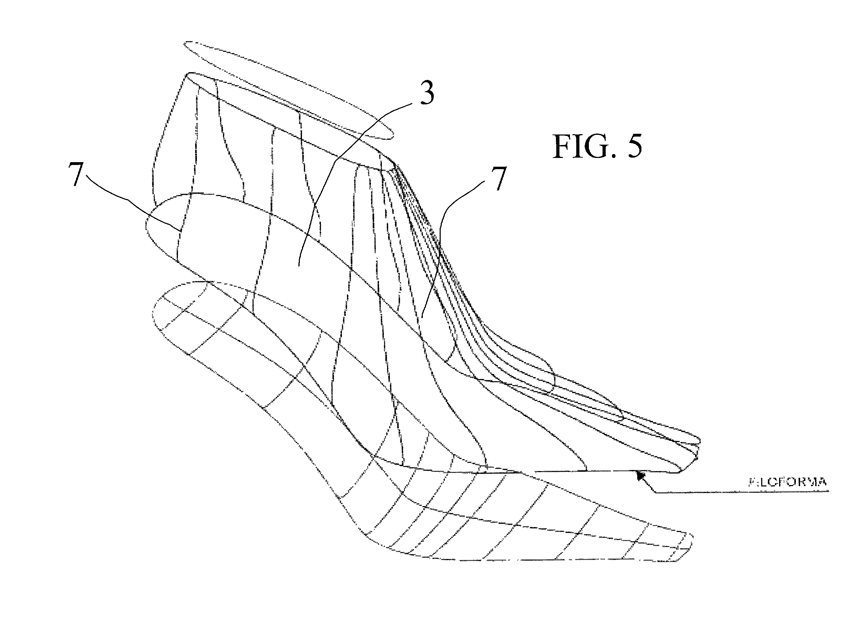

Each portion of the new shoe shape 5 is re-constructed by using a peculiar technique of the CAD software that is being run for the type of surface sought, and using guidelines 7 that reproduce the traditional templates of manual pattern makers in digital form, as shown in Figure 5.

The guidelines 7 used for re-constructing the various shoe shapes can be merged into a new shoe shape 5. This allows the manufacturer to use some components shared by several shoe shapes and for different seasons.

For example, by storing the data of the guidelines 7 used for re-constructing the shoe shape 5 into the memory 6 of the computer means 10, a database can be built for shoe shapes to be re-used, in order to fashion a new shoe shape with suitable volumes perhaps in one specific region only.

Furthermore, CAD software makes substituting one or more guidelines 7 of one design with corresponding guidelines from another design a comparatively easy task, thereby obtaining near-perfect morphing of both, or using newly styled lines in some regions of a shoe shape while retaining its basic design features elsewhere.

The construction guidelines 7 shown in Figure 5 are exemplary of the underlying principle that the shoe shape surface 3 can be adequately described by the data of its construction lines, and that such data can be utilized by CAM machinery in order to perform certain machining operations on both the shoe shape 5 and the shoe obtained therefrom.

Advantageously, this allows the true developed length and width of the plant surface, as well as the shoe shape perimeter in its significant regions, such as the fit, instep, heel-to-metatarsus-to-tarsus ratio, heel height, stride, etc., to be also obtained.

Thus, the method of the invention provides an integrated form of the processes of designing and manufacturing the various components of a shoe. Prerequisite to designing such shoe components is, in fact, the availability in digital form of the surface 3 of the shoe shape being used, which is the starting point of the process of manufacturing the components that are integrated to it, such as the insole 8, heel 12, toe piece, quarter, etc..

In particular, by having the components and their molds available in a CAD setting, true spatial correspondence of the ones with the others, as well as with the original shoe shape 5, can be achieved. This has an important advantage in that a skilled operator is not needed for assembling a shoe, because the components that have been so designed leave no margin for indetermination, so that a product of high quality is constantly yielded.

Let us see now how the method of the invention allows shoe components associated with a predetermined shoe shape in the range of shoe shapes and sizes to be manufactured in an integrated manner.

A component of great importance, as the insole 8 is, will be analyzed first.

In the prior art, a traditional insole consisted of several bodies of a fiber material, optionally stiffened with a core of sheet metal, which are pressed under a high pressure into the shape of the shoe shape surface. The result is often imprecise.

Furthermore, insoles are commercially available which comprise a body of a cellulose or non-woven fabric material impregnated with thermoplastic resins and split in its rearward portion along the direction of the thickness by a mechanical operation. A thermoplastic material, with or without said stiffening core of sheet metal, is injected into the interior of the resulting sheets.

On the other hand, the insole 8 made in accordance with the method of this invention includes a monolithic backing core 11, e.g. made of a re-unforced thermoplastic material, under a covering 13. The core 11 may be covered with a sheet 13 of a thermoformable material that is optionally bonded to another shaped sheet 14 of covering material directly contacting the foot plant to provide the shoe with comfort and hygiene properties.

The material chosen for covering the thermoformable backing may be any one, including hide, and any shape, since its characteristics can be settled at the last moment according to the shoe shape 5 actually employed and the shoe type.

The core 11 of thermoplastic material provides re-inforcement for the plantar arch down to the line of ground rest of the plant, and is a stiffening means of the whole construction, with the heel 12 being provided with a conventional underpad 18.

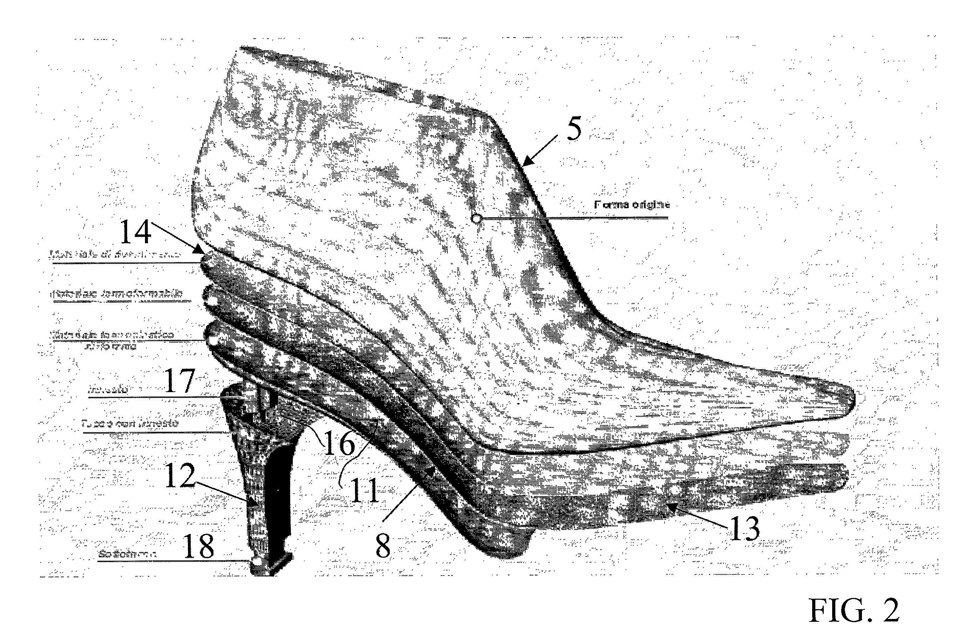

For the purpose, the top end of the heel is formed with a socket 16 of suitable cross-sectional shape, which is intended to receive snugly a mating protuberance or lug 17 formed integrally with the bottom surface of the core 11, as shown in Figure 2. Alternatively, a constructionally separate lug 17 could be bonded to the core 11 in a suitable way whatever.

Once assembled together, the two components 11 and 12 will form a unitary piece of sufficient strength to maintain the shoe walking stability.

The core 11 of re-inforced thermoplastic material is the structural portion and requires that a mold be prepared for scale manufacturing it on injection equipment.

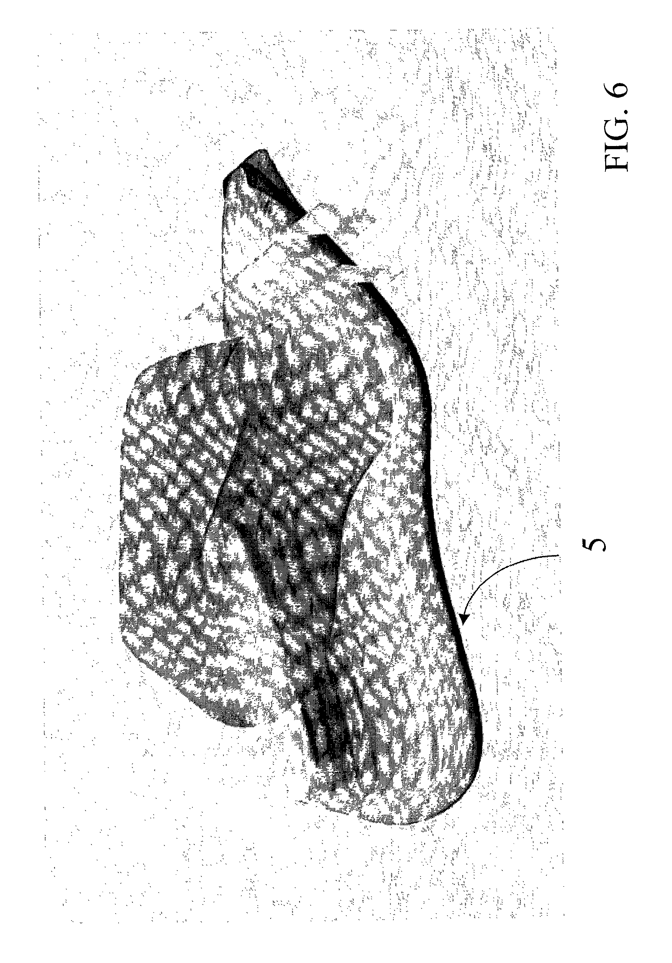

The profile and thickness of the core 11 are directly dependent on its host structure. In general, the shoe shape structure remains unchanged through a number of seasons, while styling invariably requires that the toe end be modified, as shown in Figure 6. This allows the core 11 to be used on several shoe shapes of one design but with different styling attachments, and makes a metal stiffener unnecessary.

The shaped sheet 14 of covering material has a thickness in the range of a few tenths of a millimeter to a few millimeters and is required to follow the profile of the particular shoe shape employed. This profile is obtained from the CAD data about the bottom surface of the shoe shape, and the pieces may be either conventional die-cut pieces, or pieces cut on digital machinery.

Cutting the covering material 14, bonding the thermoformable backing 13, and assembling the two pieces together are all operations that can be performed after the shoe shape characteristics are settled. This has obvious advantages of manufacturing flexibility.

As previously mentioned, the quality of the covering material may be selected from a wide range of products to meet specific requirements: nature, color, and thickness may be necessary features that mark a specific manufacturer, that might be supplying the product directly, in tune with the remainder of the shoe for which a given insole 8 is intended.

The two components are assembled by a hot-melt adhesive technique. This operation is absolutely non-polluting and ensures that the resulting shape of the insole 8 matches the shoe shape 5 exactly.

Let us review now the manufacture of the shoe heel 12.

The rim of the heel 12 and its mold are designed in a CAD setting with a socket for receiving the lug 17 provided on the bottom face of the core 11. The location and shape of the lug 17 and its mating socket 16 in the heel 12 allow the two components 11 and 12 to be aligned positively to each other, and remove one of the main causes of poor quality in shoes made with traditional methods, wherein a properly set heel 12 is allowed to depend on the operator's skill.

The location of the joint is such that the weight applied to the top piece region is properly transferred to the ground along the vertical axis of the heel 12 without twisting dangerously or distorting under load.

The heel 12 and insole 8 are assembled together subsequently to mounting the shoe shape 5, substantially in any of the following four alternative methods:
- HF sealing;
- gluing by using a structural adhesive;
- bonding by injecting a thermoplastics into the gap between the two bodies;
- using a third body of a plastics or metal material for mechanically fastening the two components together.

All the above assembly methods provide a very stable and lasting bond, and allow not to use neither nails as in current practice for fastening the uppers to the insole, nor nails and/or screws for securing the heel.

Another advantage is that an anvil metal plate is no longer to be provided in the shoe shape 5 for the nailing.

It will be appreciated that the method of this invention does solve the technical problem and offers the many advantages listed herein below.

Considerable manufacturing flexibility is achieved by having the insole 8 split into two separate components 11, 12 for assembly at the last moment, since styling changes can be made to the non-structural portion of the shoe shape such that the molds can be used for a number of seasons.
1. The material for the core 11 can be selected to just meet engineering requirements, because it is not necessary to inject, as is currently done, into a double body of a hardboard. This procedure brings about serious problems of thin material flowing, as well as of plastics material cooling, which are a major cause of distortion as the piece is withdrawn.
2. By eliminating the joint 17 to the heel 12 from the making of the core 11, an assembling technique can be optionally employed which more closely resembles the traditional technique, wherein a metal or plastics screw was driven through the core 11 into the heel 12. This allows existing heels to be used, if desired, and some of the advantages of an integrated assembly can be forfeited.

Manufacturing the core 11 by an injection technique affords a high degree of automation, reflecting on reduced labor cost and optimum utilization of the molds for a daily output that is more than twice higher than the semi-automatic cycle used for the sandwich insole previously mentioned.
1. The combination of a core and a standard fabric, with the optional addition (after the shoe is assembled) of a heel top pad, allows savings to be made in the manufacture of cheap shoe, i.e. allows the insole 8 to be lined with anti-shock linings and special coverings, such as phase-change fabrics effective to dissipate heat in summer and provide insulation in winter.

The materials used for covering the core are tailored to the surface of the shoe shape 5, thereby facilitating the operations of mounting the uppers and removing the risk of interfering with the conventional Premonata plates.

The cost of the shoe shapes 5 is made lower by the elimination of the anvil plate used for nailing, which usually gradually distorts in use and is a cause of degraded quality.

Another advantage is that the axis of the heel 12 can be aligned true to the structure. In addition, strength is enhanced by the joint of the insole 8 to the heel 12.

By eliminating many metal components (nails, screws, plates, etc.) from the shoe, reduced potential risk for the user and recycling problems at the end of the shoe life are achieved. Further advantages are listed herein below.
1. The much simpler assembling procedure allows relatively unskilled labor to be used. In addition, robots can be used for handling the integrated components, thereby adding savings in labor cost.
2. Shoe of consistent quality can be obtained, and the certification path can be implemented for the consumer's benefit.
3. A further advantage comes from eliminating the emissions from solvent-based adhesives employed to glue the finishing top pad on the traditional hardboard insole and in manufacturing the same.
4. Enhanced flexing of the shoe toe portion is made possible by the thermoformable material exhibiting definitely more elastic and resilient properties in comparison with cellulose cardboard.

The shoes manufactured in accordance with the invention wear easier and show improved vapor absorption, unlike those manufactured according to the prior art, which deteriorate quickly on account of their cardboard insoles.
1. Savings have also been observed in equipment and material stock, by virtue of the inside covering of the traditional insole and the heel mounting machine having been eliminated which are frequent causes of production shutdowns and direct causes of dangerous qualitative fluctuations (missed delivery of one or more nails).
2. It has been found, moreover, that time-to-market is improved by the fast times available for two essential components, which require a no long serial adjusting process for their integration.
3. Finally, it is noteworthy that some equipment can be re-used for different season productions and with a rationalized set of shoe shapes, thereby bringing about substantial savings in time and cost for settling upon new designs.

## Claims

1. A method for developing and integrated manufacturing shoe components, wherein a range of shoe shapes distributed in a series of shoe sizes are first provided from a base shoe shape (2) provided in a basic shoe size, **characterized in that** it comprises the following steps:
- gathering the spatial co-ordinates (x_{B}, y_{B}, z_{B}) of points on the base shoe shape (2) of basic shoe size by using computer means (10) on which CAD programs are run;
- obtaining, from the spatial co-ordinates (x_{B}, y_{B}, z_{B}) of points on the base shoe shape (2) of basic shoe size, spatial co-ordinates (xₙ, yₙ, zₙ) of points on at least another shoe shape in the range, as well as some shoe components (8, 11, 12) corresponding to said at least another shoe shape in the range, by using said computer means (10) provided with calculation formulae;
- feeding an NC tool machine with the spatial co-ordinates of said shoe components (8,11,12), for manufacturing respective moulds of said components;
- molding the respective components.

2. Method according to Claim 1, **characterized in that** the spatial co-ordinates (x_{B}, y_{B}, z_{B}) of points on the base shoe shape (2) of a basic shoe size are obtained from a storage unit connected to or associated with said computer means (10).

3. Method according to Claim 1, **characterized in that** it comprises a parallel step of feeding an NC tool machine with said spatial co-ordinates (xₙ, yₙ, zₙ) of points on said at least another shoe shape (5) in the range, for manufacturing said at least another shoe shape in the range.

4. Method according to Claim 1, **characterized in that** the following data are obtained by means of said computer means (10) provided with predetermined calculation formulae: profile, volume, or spatial co-ordinates of said shoe components (8, 12) associated with said at least another shoe shape (5) in the range.

5. Method according to Claim 1, **characterized in that** said components are at least an insole (8), heel (12), quarter, toe piece, sole, etc. of a shoe.

6. Method according to Claim 1, **characterized in that** said tool machine incorporates and is driven by said computer means (10).

7. A shoe made of a predetermined size in very large scales by automatic assembly machines, **characterized in that** it incorporates an insole (8) comprising a backing core (11) and a covering material (13).

8. Shoe according to Claim 7, **characterized in that** said insole comprises a core (11) made out of a reinforced thermoplastic material and is covered with a sheet (13) of a thermoformable material.

9. Shoe according to Claim 7, **characterized in that** said core (11) of thermoplastic material is essentially a support for the plantar arch extending to the line of rest of the foot plant on the ground.

10. Shoe according to Claim 7, **characterized in that** said core (11) is also bonded to a layer (14) of a covering material in contact with the foot plant.

11. Shoe according to Claim 7, **characterized in that** it includes a heel (12) having a top end formed with a socket (16) adapted to receive a mating protuberance (17) bonded to the bottom surface of said core (11).

12. Shoe according to Claim 11, **characterized in that** said heel (12) is glued or bonded to said core (11).

13. Shoe according to Claim 8, **characterized in that** said core is manufactured by an injection molding.

14. Shoe according to Claim 11, **characterized in that** said protuberance (17) is integrally formed with said core (11).

15. Shoe according to Claim 7, **characterized in that** said core (11) is fastened to a shoe heel (12) by means of a set screw.
